# EUROPÄISCHE PATENTSCHRIFT

(11) **EP 1 385 723 B1**
(45) Veröffentlichungstag und Bekanntmachung des Hinweises auf die Patenterteilung: **12.08.2009**
(21) Anmeldenummer: 02745268.9
(22) Anmeldetag: 26.04.2002
(51) Int. Cl.: B60T 8/36, B60T 13/68, B60T 15/18

(54) **ELEKTROPNEUMATISCHES REGELVENTIL MIT EINER DICHTUNGSANORDNUNG**
ELECTROPNEUMATIC CONTROL VALVE WITH A SEAL ARRANGEMENT
VANNE DE REGULATION ELECTROPNEUMATIQUE DOTEE D'UN ENSEMBLE JOINT

(30) Priorität: 26.04.2001 DE 10120323
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004633
(87) Internationale Veröffentlichungsnummer: WO 2002/087938

(56) Entgegenhaltungen:
- EP-A- 1 022 204
- DE-A- 19 605 562
- DE-C1- 4 202 730
- US-A- 4 898 081

## Beschreibung

Die Erfindung betrifft ein elektropneumatisches Regelventil für ein Druckluftbremssystem eines Fahrzeuges mit einem Relaisventilgehäuse, in dem ein axial verstellbarer Steuerkolben zur Betätigung einer den Druckfluss zwischen mehreren äußeren Anschlüssen schaltenden Ventilsitzanordnung angeordnet ist, wobei der Steuerkolben über mindestens ein elektromagnetisches Vorsteuerventil zur Axialverstellung beaufschlagbar ist, welches in einem Vorsteuerventilgehäuse untergebracht ist, das über eine Dichtungsanordnung mit dem Relaisventilgehäuse lösbar verbunden ist. Insbesondere befasst sich die vorliegende Erfindung mit einer speziellen Ausbildung dieser Dichtungsanordnung.

Ein elektropneumatisches Regelventil dieser Art wird innerhalb eines Druckluftbremssystems eines Fahrzeuges eingesetzt, um einen Bremsdruck entsprechend der gewünschten - durch ein Fußbremspedal vorgebbaren - Bremswirkung auszuregeln. Eine vom Regelventil ausgehende Bremsleitung steht zu diesem Zwecke gewöhnlich mit einem Bremszylinder in Verbindung, der wiederum die zum Bremsen des Fahrzeuges benötigte Bremskraft erzeugt und an eine kolbenstangenseitig angeschlossene Scheiben- oder Trommelbremse weiterleitet. Die Vorgabe des Druck-Sollwertes für das elektropneumatische Regelventil kann sowohl elektrisch als auch pneumatisch erfolgen. Die pneumatische Ansteuerung wird meist jedoch nur zur Sicherheit im Falle eines Ausfalls der elektrischen Ansteuerung benutzt.

Ein gattungsgemäßes elektropneumatisches Regelventil ist aus der DE 196 05 562 A1 bekannt. Das Regelventil für ein Druckluftbremssystem eines Nutzfahrzeuges weist ein zweigeteiltes metallisches Gehäuse auf. Am unteren Relaisventilgehäuse befinden sich ein Bremsleitungsanschluss, ein Speisedruckanschluss sowie ein Entlüftungsanschluss. Über eine innenliegende Ventilsitzanordnung, bestehend aus einem gegen zwei konzentrische Ventilsitze drückendes Verschlusselement, ist ein Druckluftfluss zwischen den äußeren Anschlüssen schaltbar. Zum Schalten wird das Verschlusselement entgegen der Kraft einer Rückstellfeder axial betätigt. Die Betätigung des Verschlusselementes erfolgt über einen ebenfalls im Relaisventilgehäuse innerhalb eines Hohlraumes angeordneten großflächigen Steuerkolben. Der Steuerkolben wird über einen Steuerdruck zur Längsverstellung beaufschlagt, wobei der Steuerdruck über eine Vorsteuerventilanordnung erzeugt wird. Die Vorsteuerventilanordnung ist innerhalb eines am Relaisventilgehäuse angebrachten Vorsteuerventilgehäuses angeordnet. Zur Einstellung oder Änderung des Steuerdrucks dienen zwei einzelne Elektromagnetventile. Das eine Elektromagnetventil ist stromlos geschlossen und kommuniziert über gehäuseinteme Druckmittelkanäle mit dem Speisedruckanschluss. Der Arbeitsanschluss des Elektromagnetventils ist mit der Steuerkammer verbunden. Das zweite Elektromagnetventil dient dem Entlüften der Steuerkammer und ist stromlos geschlossen. Das Elektromagnetventil ist ebenfalls arbeitsleitungsseitig mit der Steuerkammer verbunden, wogegen das Elektromagnetventil abluftseitig mit der Atmosphäre in Verbindung steht. Der Steuerdruck wird durch ein koordiniertes Bestromen beider Elektromagnetventile verändert. Diese Änderung erfolgt entsprechend einer Druckregelung. Zur Überwachung des Arbeitsdrucks ist ein Drucksensor in einer Arbeitskammer des Regelventils angeordnet. Ferner ist eine Regelelektronik vorgesehen, an welche die beiden Elektromagnetventile sowie der Drucksensor angeschlossen sind. Die Sollwert-Vorgabe für die Regelung erfolgt von einer entfernt angeordneten zentralen Steuereinheit des Druckluftbremssystems.

Bei dem vorstehend beschriebenen Regelventil sind eine Reihe von Dichtungsmaßnahmen erforderlich, um eine zuverlässige Trennung von Bereichen unterschiedlichen Drucks sicherzustellen. So werden die beiden Gehäusehälften über einen Dichtring miteinander verbunden, um ein Abströmen von Druckluft aus der benachbart zur Steuerkammer angeordneten Arbeitskammer des Regelventils zu verhindern. Hierfür wird ein Dichtring verwendet, der in miteinander korrespondierenden absatzartigen Ausnehmungen zwischen die beiden Gehäusehälften eingelegt ist. In örtlicher Nähe dieser statischen Gehäuseabdichtung ist zur dynamischen Steuerkolbenabdichtung ein weiterer Dichtring innerhalb einer außenradialen nutförmigen Ausnehmung am Steuerkolben gehalten. Dieser Dichtring gleitet bei einer Axialverstellung des Steuerkolbens dichtend entlang der Wandung der Steuer- /Arbeitskammer des Regelventils.

Ein Nachteil dieser Dichtungsanordnung ist darin zu sehen, dass an den die vorstehend beschriebenen Dichtringe aufnehmenden Bauteilen entsprechende nutförmige Ausnehmungen oder Absätze hergestellt werden müssen. Dies ist gewöhnlich nur durch einen zusätzlichen Arbeitsgang - meist durch Spanen - möglich. Weiterhin ist es erforderlich, auch ventilinteme Druckmittelkanäle, die zwischen dem Relaisventilgehäuse und dem Vorsteuerventilgehäuse verlaufen, über separate einzelne Dichtringe im Verbindungsbereich beider Gehäuseteile abzudichten. All die vorstehend genannten Dichtelemente sind aufwendig zu montieren, da die Montage nicht automatisierbar ist. Bei der manuellen Montage werden vereinzelt auch einzelne Dichtungselemente vergessen, was zu einem hohen Nacharbeitsaufwand führt.

Es ist daher die Aufgabe der vorliegenden Erfindung, eine Dichtungsanordnung für ein gattungsgemäßes elektromagnetisches Regelventil zu schaffen, die zum einen zu einer Minimierung des Fertigungsaufwandes an den Gehäusebestandteilen führt und die zum anderen auch eine einfache Montage gewährleistet.

Die Aufgabe wird ausgehend von einem elektropneumatischen Regelventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Dichtungsanordnung zwischen dem Relaisventilgehäuse und dem Vorsteuerventilgehäuse als ein im Wesentlichen ringförmiges Kombinationsdichtungselement ausgebildet ist, das einen außenradialen Dichtungsabschnitt zur statischen Gehäuseabdichtung sowie einen innenradialen Dichtungsabschnitt zur dynamischen Steuerkolbenabdichtung aufweist.

Der Vorteil der erfindungsgemäßen Dichtungsanordnung liegt in einer fertigungs- und montageaufwandreduzierenden Funktionsintegration. Um diese Funktionsintegration zu erzielen, wird bei der Erfindung die dynamische Steuerkolbenabdichtung von einer Platzierung innerhalb einer Nut am Steuerkolben verlagert zu einer Platzierung seitens des Ventilgehäuses. Die Platzierung seitens des Ventilgehäuses erfolgt dabei unter Einbeziehung der statischen Gehäuseabdichtung zwischen den beiden Gehäuseteilen. Da nunmehr weniger einzelne Dichtungen vorhanden sind, ist die Montage einfacher und schneller zu bewerkstelligen. Es ist nicht mehr erforderlich, am Steuerkolben eine nutförmige Ausnehmung zur Aufnahme eines Dichtrings anzubringen, was den Fertigungsaufwand für den Steuerkolben reduziert.

Vorzugsweise ist der am Steuerkolben dynamisch dicht zur Anlage kommende innenradiale Dichtungsabschnitt nach Art einer Doppellippendichtung geformt. Die beiden elastischen Dichtlippen der Doppellippendichtung spreizen sich dabei schenkelartig und im Wesentlichen axial ausgerichtet von dem sich radial erstreckenden Dichtungshauptabschnitt ab. Diese zweiseitige Lippendichtung trägt zu einer Reduzierung der Reibung bei der dynamischen Steuerkolbenabdichtung bei. Der Kontakt zum Dichtungspartner, hier dem Steuerkolben, erfolgt lediglich über zwei axial beabstandete umlaufende Dichtlinien. Durch die damit einhergehende Reibungsreduzierung kann infolge der günstigen Kräftebilanz sogar ein kleinerer Kolbenwirkdurchmesser gewählt werden.

Der andere, zwischen dem Relaisventilgehäuse und dem Vorsteuerventilgehäuse statisch dichtende außenradiale Dichtungsabschnitt des Kombinationsdichtungselements kann als ein am sich radial erstreckenden Dichtungshauptabschnitt angeformter elastischer Dichtwulst ausgebildet sein. Der Dichtwulst ist vorzugsweise im Querschnitt gesehen dreieckig ausgebildet und läuft zu einer Dichtkante aus, die mit dem Dichtungspartner - hier dem Relaisventilgehäuse einerseits und dem Vorsteuerventilgehäuse andererseits - korrespondiert. Diese Dichtungskontur ermöglicht eine zuverlässige statische Abdichtung beider Gehäuseteile, so dass ein Abströmen von Druckmittel aus dem Inneren des Regelventils an die Atmosphäre verhindert wird.

Innerhalb des ebenfalls aus einem elastischen Dichtungsmaterial bestehenden Dichtungshauptabschnittes kann eine innenliegende Verstärkungseinlage - beispielsweise aus Stahl - eingegossen werden, um die Stabilität des Kombinationsdichtungselements zu erhöhen.

Gemäß einer weiteren, die Erfindung verbesserenden Maßnahme kann im Bereich des Dichtungshauptabschnittes an mindestens einer Stelle auf dem Umfang des ringförmigen Kombinationsdichtungselements ein Durchbruch angebracht werden. Der mindestens eine Durchbruch gestattet eine Verbindung eines vom Relaisventilgehäuse zum Vorsteuerventilgehäuse verlaufenden ventilinternen Druckmittelkanals. Um auch für einen solchen Druckmittelkanal eine zuverlässige Abdichtung sicherzustellen, ist der Durchbruch vorzugsweise beidseitig mit einer Dichtwulst umrandet. Daneben kann im Bereich des Dichtungshauptabschnittes ebenfalls an mindestens einer Stelle auf dem Umfang des ringförmigen Kombinationsdichtungselements ein Druckausgleichselement platziert sein. Das Druckausgleichselement ermöglicht einen geschützten Druckausgleich mit der Atmosphäre für Bereiche innerhalb des Vorsteuerventilgehäuses, die nicht als Druckkammer ausgebildet sind, wie beispielsweise dem Elektronikraum. Das Druckausgleichselement wird in das Kombinationsdichtungselement vorzugsweise bei der Herstellung einvulkanisiert oder nachträglich eingeknöpft.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Längsschnitt durch ein elektropneumatisches Regelventil mit einer erfindungsgemäßen Dichtungsanordnung,
- Figur 2: einen Längsschnitt als Detail im Bereich des Steuerkolbens von Figur 1,
- Figur 3: eine Draufsicht auf das Kombinationsdichtungselement,
- Figur 4: einen Querschnitt in der Schnittlinie A-A in Figur 3, und
- Figur 5: einen Querschnitt durch ein Kombinationsdichtungselement im Bereich eines hierin integrierten Druckausgleichselements.

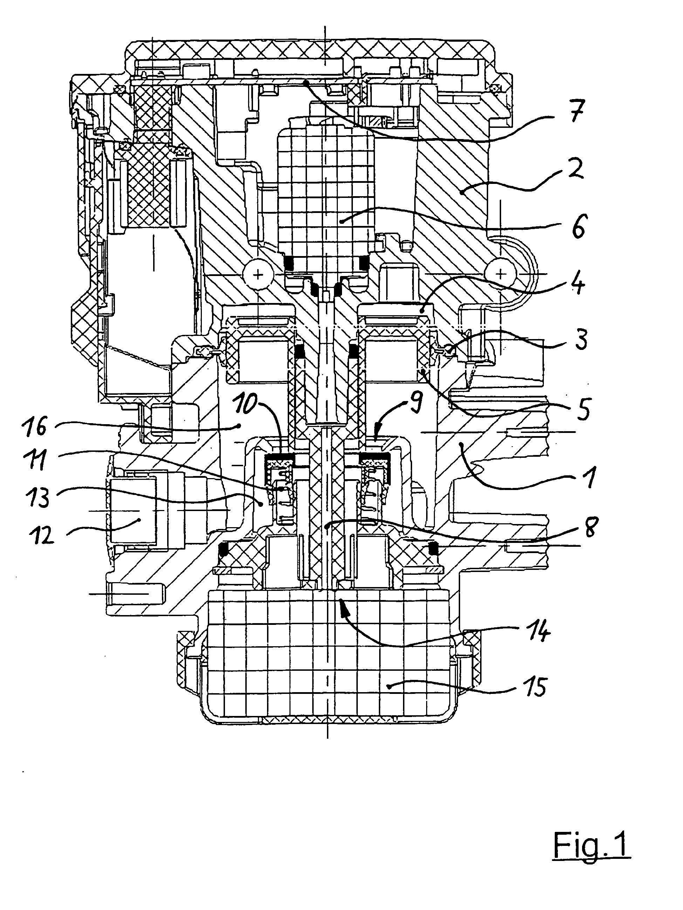

Das in der Figur 1 dargestellte elektropneumatische Regelventil besitzt ein zweigeteiltes Gehäuse, das aus einem unteren Relaisventilgehäuse 1 besteht, welches mit einem oberen Vorsteuerventilgehäuse 2 über ein dazwischenliegendes Kombinationsdichtungselement 3 verbunden ist. Die Verbindung erfolgt dabei über eine (nicht weiter dargestellte) Verschraubung. Das Relaisventilgehäuse 1 und das Vorsteuerventilgehäuse 2 schließen eine innenliegende Steuerkammer 4 ein, in der ein Steuerkolben 5 axial bewegbar angeordnet ist. Zur axialen Verstellung des Steuerkolbens 5 dient eine im Vorsteuerventilgehäuse 2 untergebrachte Vorsteuerventilanordnung, von der hier lediglich ein als Auslassmagnet dienendes Vorsteuerventil 6 gezeigt ist. Die Vorsteuerventilanordnung wird über eine ebenfalls im Vorsteuerventilgehäuse 2 angeordnete Elektronikeinheit 7 elektrisch angesteuert. Das gezeigte Vorsteuerventil 6 entlüftet bei Betätigung die Steuerkammer 4, wobei die Abluft über einen koaxialen Entlüftungskanal 8 an die Atmosphäre abgeleitet wird. Neben dem als Auslassventil dienenden Vorsteuerventil 6 ist ein (hier nicht gezeigtes) zweites Vorsteuerventil als Einlassventil vorhanden, das für eine Beaufschlagung der Steuerkammer 4 mit einem Steuerdruck dient, um den Steuerkolben 5 zu betätigen.

Bei einer solchen Beaufschlagung der Steuerkammer 4 betätigt der Steuerkolben 5 über eine untere hülsenartige koaxiale Anformung eine Ventilsitzanordnung 9. Die Ventilsitzanordnung 9 besteht im Wesentlichen aus einem Verschlusselement 10, das durch die Kraft einer rückstellenden Feder 11 gegen zwei konzentrisch angeordnete benachbarte Ventilsitze gedrückt wird. Hierüber ist der Druckluftfluss zwischen einem am Relaisventilgehäuse 1 angeordneten Bremsleitungsanschluss 12 einerseits sowie einem (hier nicht erkennbar) Speisedruckanschluss, der gleichwohl mit einer internen Speisedruckkammer 13 in Verbindung steht, und einem Entlüftungsanschluss 14 andererseits schaltbar. Der Entlüftungsanschluss 14 ist zusätzlich mit einem Schalldämpfer 15 zur Geräuschminderung der ausströmenden Abluft versehen.

Das elektropneumatische Regelventil ist hier in seiner abgeschlossenen Schaltstellung gezeigt. Bei Beaufschlagung der Steuerkammer 4 mit einem Steuerdruck und darauf folgender Bewegung des Steuerkolbens 5 in Richtung einer unteren Position erfolgt durch Öffnen des außenliegenden Ventilsitzes der Ventilsitzanordnung 9 ein Druckluftfluss, ausgehend von der Speisedruckkammer 13 zu einer Arbeitskammer 15, die an den Bremsleitungsanschluss 12 einmündet, um den Bremsdruck infolgedessen zu erhöhen.

Bei einer Entlüftung der Steuerkammer 4 wird der Steuerkolben 5 in eine obere Position überführt, wobei der innenliegende Ventilsitz der Ventilsitzanordnung 9 geöffnet wird, so dass ausgehend vom Bremsleitungsanschluss 12 Druckluft über die Arbeitskammer 16 zum Entlüftungsanschluss 14 gelangt, um den Bremsdruck entsprechend abzusenken. Somit wird der Bremsdruck durch eine wechselseitige Bewegung des Steuerkolbens 5 beeinflusst. In der mittleren, abgeschlossenen Schaltposition erfolgt kein Druckluftfluss.

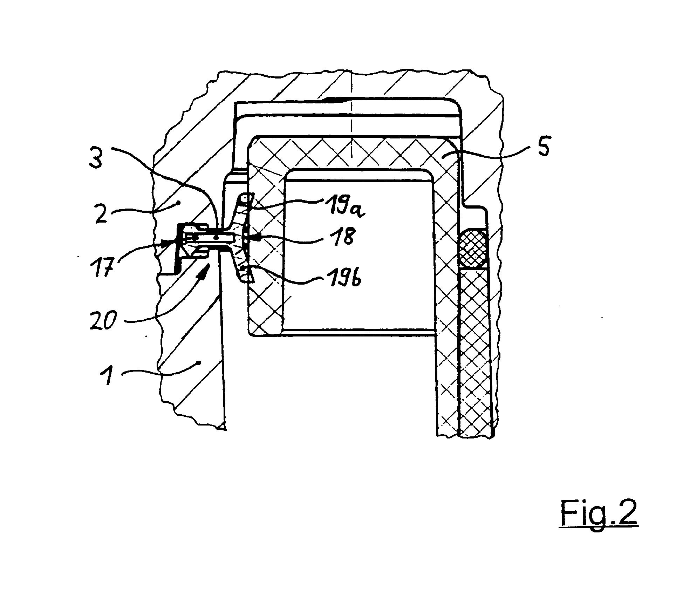

Wie deutlicher aus der Figur 2 hervorgeht, weist das zwischen dem Relaisventilgehäuse 1 und dem Vorsteuerventilgehäuse 2 angeordnete Kombinationsdichtungselement 3 einen außenradialen Dichtungsabschnitt 17 zur statischen Gehäuseabdichtung sowie einen innenradialen Dichtungsabschnitt 18 zur dynamischen Abdichtung gegenüber dem Steuerkolben 5 auf. Der am Steuerkolben 5 dynamisch dicht zur Anlage kommende innenradiale Dichtungsabschnitt 18 ist nach Art einer Doppellippendichtung geformt und besteht insoweit aus zwei elastischen Dichtlippen 19a, 19b, die sich schenkelartig im Wesentlichen axial gegenüber einem sich radial erstreckenden Dichtungshauptabschnitt 20 abspreizen.

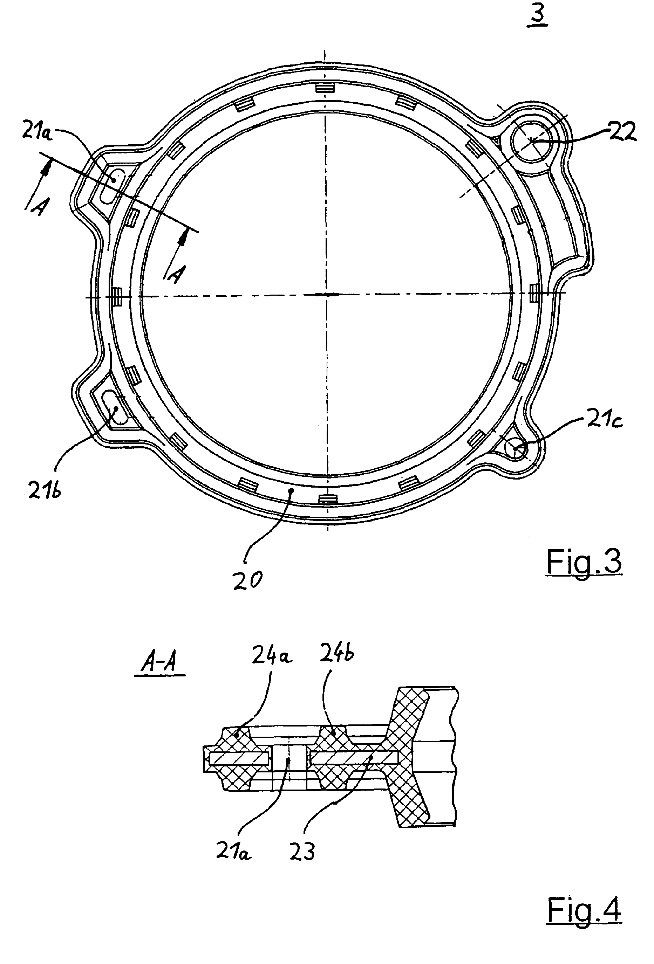

Gemäß Figur 3 ist das Kombinationsdichtungselement 3 im Wesentlichen kreisringförmig ausgebildet, wobei an mehreren Stellen des Dichtungshauptabschnittes 20 diverse Durchbrüche 21 a, 21 b, 21 c vorgesehen sind. Die Durchbrüche 21 a-21 c dienen der Verbindung von zwischen dem Relaisventilgehäuse und dem Vorsteuerventilgehäuse verlaufenden ventilinternen Druckmittelkanälen. Daneben ist im Bereich des Dichtungshauptabschnittes 20 auch ein Druckausgleichselement 22 vorgesehen. Das Druckausgleichselement 22 dient einem gehäuseinternen Druckausgleich und ist in diesem Ausführungsbeispiel in das Kombinationsdichtungselement 3 bei dessen Herstellung einvulkanisiert.

Wie aus der Detailansicht gemäß Figur 4 hervorgeht, ist in dem ansonsten aus einem elastischen Dichtungsmaterial bestehenden Kombinationsdichtungselement 3 eine Verstärkungseinlage 23 aus Stahl vorgesehen. Um den hier exemplarisch dargestellten Durchbruch 21 a herum ist beidseitig des Dichtungshauptabschnittes 20 ein Dichtwulst 24a, 24b angeformt, um den ventilinternen Druckmittelkanal im Bereich dieser Verbindungsstelle zuverlässig abzudichten.

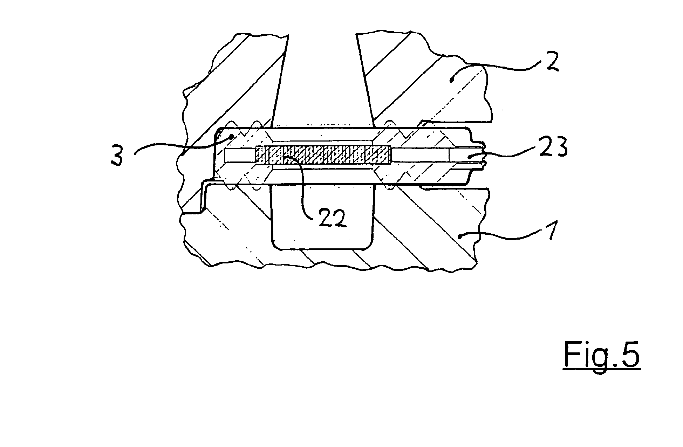

Aus Figur 5 geht die Lage des Druckausgleichselements 22 innerhalb des Kombinationsdichtungselements 3 hervor. Das Druckausgleichselement 22 ist in derselben Ebene wie die benachbarte Verstärkungseinlage 23 angeordnet.

Die vorliegende Erfindung ist nicht beschränkt auf das vorstehende, nur beispielhaft angegebene Ausführungsbeispiel. Es sind vielmehr auch Abwandlungen hiervon denkbar, die in den Schutzbereich der nachfolgenden Ansprüche eingreifen können.

### Bezugszeichenliste

- 1: Relaisventilgehäuse
- 2: Vorsteuerventilgehäuse
- 3: Kombinationsdichtungselement
- 4: Steuerkammer
- 5: Steuerkolben
- 6: Vorsteuerventil
- 7: Elektronikeinheit
- 8: Entlüftungskanal
- 9: Ventilsitzanordnung
- 10: Verschlusselement
- 11: Feder
- 12: Bremsleitungsanschluss
- 13: Arbeitskammer
- 14: Entlüftungsanschluss
- 15: Schalldämpfer
- 16: Arbeitskammer
- 17: Dichtungsabschnitt
- 18: Dichtungsabschnitt
- 19: Dichtlippe
- 20: Dichtungshauptabschnitt
- 21: Durchbruch
- 22: Druckausgleichselement
- 23: Verstärkungseinlage
- 24: Dichtwulst

## Patentansprüche

1. Elektropneumatisches Regelventil für ein Druckluftbremssystem eines Fahrzeuges mit einem Relaisventilgehäuse (1), in dem ein axial verstellbarer Steuerkolben (5) zur Betätigung einer den Druckluftfluss zwischen mehreren äußeren Anschlüssen (11,13) schaltenden Ventilsitzanordnung (9) angeordnet ist, wobei der Steuerkolben (5) über mindestens ein elektromagnetisches Vorsteuerventil (6) zur Axialverstellung beaufschlagbar ist, welches in einem Vorsteuerventilgehäuse (2) untergebracht ist, das über eine Dichtungsanordnung mit dem Relaisventilgehäuse (1) lösbar verbundenen ist,
**dadurch gekennzeichnet, dass** die Dichtungsanordnung zwischen dem Relaisventilgehäuse (1) und dem Vorsteuerventilgehäuse (2) als ein im wesentlichen ringförmiges Kombinationsdichtungselement (3) ausgebildet ist, das einen außenradialen Dichtungsabschnitt (17) zur statischen Gehäuseabdichtung sowie einen innenradialen Dichtungsabschnitt (18) zur dynamischen Steuerkolbenabdichtung aufweist.

2. Elektropneumatisches Regelventil nach Anspruch 1,
**dadurch gekennzeichnet, dass** der am Steuerkolben (5) dynamisch dichtend zur Anlage kommende innenradiale Dichtungsabschnitt (18) nach Art einer Doppellippendichtung geformt ist, deren beiden elastischen Dichtlippen (19a, 19b) sich schenkelartig und im wesentlichen axial ausgerichtet von dem sich radial erstreckenden Dichtungshauptabschnitt (20) abspreizen.

3. Elektropneumatisches Regelventil nach Anspruch 1,
**dadurch gekennzeichnet, dass** der zwischen dem Relaisventilgehäuse (1) und dem Vorsteuerventilgehäuse (2) statisch dichtende außenradiale Dichtungsabschnitt (17) als ein am sich radial erstreckenden Dichtungshauptabschnitt (20) angeformter elastischer Dichtwulst ausgebildet ist.

4. Elektropneumatisches Regelventil nach Anspruch 3,
**dadurch gekennzeichnet, dass** der sich radial erstreckende und aus einem elastischen Material bestehende Dichtungshauptabschnitt (20) mit einer innenliegenden Verstärkungseinlage (23) aus einem starren Material versehen ist.

5. Elektropneumatisches Regelventil nach Anspruch 4,
**dadurch gekennzeichnet, dass** die Verstärkungseinlage (23) aus Federstahl besteht.

6. Elektropneumatisches Regelventil nach Anspruch 3,
**dadurch gekennzeichnet, dass** im Bereich des Dichtungshauptabschnittes (20) an mindestens einer Stelle auf dem Umfang des ringförmigen Kombinationsdichtungselements (3) ein Durchbruch (21 a bis 21 c) vorgesehen ist, um eine Verbindung eines vom Relaisventilgehäuse (1) zum Vorsteuerventilgehäuse (2) verlaufenden ventilinternen Druckmittelkanals zu gewährleisten.

7. Elektropneumatisches Regelventil nach Anspruch 6,
**dadurch gekennzeichnet, dass** der mindestens eine Durchbruch (21 a bis 21 c) beidseitig von einer Dichtwulst (24a, 24b) umrandet ist.

8. Elektropneumatisches Regelventil nach Anspruch 6,
**dadurch gekennzeichnet, dass** der vom Relaisventilgehäuse (1) zum Vorsteuerventilgehäuse (2) verlaufende ventilinterne Druckmittelkanal das mindestens eine Vorsteuerventil mit Speisedruck versorgt.

9. Elektropneumatisches Regelventil nach einem der vorstehenden Ansprüche,
**dadurch gekennzeichnet, dass** der Dichtwulst (21 a bis 21 c) im Querschnitt gesehen dreieckig oder trapezförmig ausgebildet ist und zu einer Dichtkante ausläuft, die mit dem Dichtungspartner korrespondiert.

10. Elektropneumatisches Regelventil nach einem der vorstehenden Ansprüche,
**dadurch gekennzeichnet, dass** im Bereich des Dichtungshauptabschnittes (20) an mindestens einer Stelle auf dem Umfang des ringförmigen Kombinationsdichtungselements (3) ein Druckausgleichselement (22) platziert ist, um einen geschützten Druckausgleich mit der Atmosphäre für nicht als Druckkammer genutzte Bereiche des Vorsteuerventilgehäuses (2) zu schaffen.

11. Elektropneumatisches Regelventil nach einem der vorstehenden Ansprüche,
**dadurch gekennzeichnet, dass** das Druckausgleichselement (22) in den Dichtungshauptabschnitt (20) des Kombinationsdichtungselements (3) einvulkanisiert oder nachträglich eingeknüpft ist.

## Claims

1. Electro-pneumatic regulating valve for a compressed-air system in a vehicle, comprising a relay valve housing (1) in which an axially adjustable control piston (5) is disposed for actuating a valve seat group (9) switching the flow of compressed air between several external connectors (11, 13), with said control piston (5) being adapted to be operated via at least one electromagnetic pilot valve (6) for axial displacement, which is accommodated in a pilot valve housing (2) that is releasably connected via a sealing means to said relay valve housing (1),
**characterised in that** said sealing means is designed as a substantially annular combination sealing element (3) between said relay valve housing (1) and said pilot valve housing (2), which comprises an externally radial sealing section (17) for static sealing of the housing as well as an internally radial sealing section (18) for the dynamic sealing of said control piston.

2. Electro-pneumatic regulating valve according to Claim 1,
**characterised in that** said internally radial sealing section (18), which is caused to bear against said control piston (5) for dynamic sealing, is shaped in the manner of a dual lip seal whose two resilient sealing lips (19a, 19b) spread off from the radially extending main sealing section (20) in the manner of branches and with a substantially axial orientation.

3. Electro-pneumatic regulating valve according to Claim 1,
**characterised in that** said externally radial sealing section (17) for static sealing between said relay valve housing (1) and said pilot valve housing (2) is configured as a resilient sealing bead formed on said radially extending main sealing section (20).

4. Electro-pneumatic regulating valve according to Claim 3,
**characterised in that** said radially extending main sealing section (20), which consists of a resilient material, is provided with an inside reinforcing insert (23) made of a rigid material.

5. Electro-pneumatic regulating valve according to Claim 4,
**characterised in that** said reinforcing insert (23) consists of spring steel.

6. Electro-pneumatic regulating valve according to Claim 3,
**characterised in that** an aperture (21a to 21c) is formed in the region of said main sealing section (20) on at least one site along the periphery of said annular combination sealing element (3) so as to ensure a connection of a pressurised-medium passage internal of the valve, which extends from said relay valve housing (1) to said pilot valve housing (2).

7. Electro-pneumatic regulating valve according to Claim 6,
**characterised in that** said at least one aperture (21a to 21c) is surrounded on both sides by a sealing bead (24a, 24b).

8. Electro-pneumatic regulating valve according to Claim 6,
**characterised in that** said pressurised-medium passage internal of the valve, which extends from said relay valve housing (1) to said pilot valve housing (2) supplies at said at least one pilot valve with feeding pressure.

9. Electro-pneumatic regulating valve according to any of the preceding Claims,
**characterised in that** said sealing bead (21 a to 21 c), when seen in its cross-section, presents a triangular or trapezoidal design and terminates towards a sealing edge corresponding to the sealing partner.

10. Electro-pneumatic regulating valve according to any of the preceding Claims,
**characterised in that** a pressure-equalizing element (22) is placed on at least one site along the periphery of said annular combination sealing element (3), in the zone of said main sealing section (20), so as to create protected pressure equalization with the atmosphere for areas in said pilot valve housing (2), which are not employed as pressure chamber.

11. Electro-pneumatic regulating valve according to any of the preceding Claims,
**characterised in that** said pressure-equalizing element (22) is integrated into said main sealing section (20) of said combination sealing element (3) by vulcanisation or tied into it subsequently.

## Revendications

1. Soupape de réglage électropneumatique pour un système pneumatique dans un véhicule, comprenant une cage de soupape de relais (1), dans laquelle un piston pilote (5) réglable en sens axial est disposé à commander un ensemble à siège de soupape (9) commutant le courant de l'air cmprimé entre plusieurs raccords extérieurs (11, 13), audit piston pilote (5) étant apte à être manoeuvré via au moins une soupape pilote électromagnétique (6) pour le réglage axial, qui est accommodée dans une cage de soupape pilote (2) qui est raccordée, de façon détachable, via un moyen d'étanchéité à ladite cage de soupape de relais (1),
**caractérisée en ce que** ledit moyen d'étanchéité est conçu sous forme d'un élément d'étanchéité combiné essentiellement annulaire (3) entre ladite cage de soupape de relais (1) et ladite cage de soupape pilote (2), qui comprend un segment de joint extérieurement radial (17) pour l'étanchéité statique de la cage ainsi que d'un segment de joint intérieurement radial (18) pour l'étanchéité dynamique dudit piston pilote.

2. Soupape de réglage électropneumatique selon la revendication 1,
**caractérisée en ce que** ledit segment de joint intérieurement radial (18), qui est cauesé à porter contre ledit piston pilote (5) pour l'étanchéité dynamique, est formé de la manière d'un joint à lèvres double, dont les deux lèvres d'étanchéité élastiques (19a, 19b) s'écartent de la partie d'étanchéité principale (20), qui s'étend en sens radial, de la manière des branches et à une orientation essentiellement axiale.

3. Soupape de réglage électropneumatique selon la revendication 1,
**caractérisée en ce que** ledit segment de joint extérieurement radial (17) pour l'étanchéité statique entre ladite cage de soupape de relais (1) et ladite cage de soupape pilote (2) eset configuré sous forme d'un bourrelet d'étanchéité élastique formé à ladite partie d'étanchéité principale (20) s'étendant en sens radial.

4. Soupape de réglage électropneumatique selon la revendication 3,
**caractérisée en ce que** ladite partie d'étanchéité principale (20) s'étendant en sens radial, qui consiste en un matériau élastique, est pourvue d'un insert de renforcement intérieur (23) fait en un matériau rigide.

5. Soupape de réglage électropneumatique selon la revendication 4,
**caractérisée en ce que** ledit insert de renforcement (23) consiste en acier à ressort.

6. Soupape de réglage électropneumatique selon la revendication 3,
**caractérisée en ce qu'**un passage (21 a à 21 c) est formé dans la zone de ladite partie d'étanchéité principale (20) à au moins un point le long de la périphérie dudit élément d'étanchéité combiné annulaire (3) afin d'assurer un raccord d'un conduit de milieu sous pression à l'intérieur de la soupape, qui s'étend à partir de ladite cage de soupape de relais (1) vers ladite cage de soupape pilote (2).

7. Soupape de réglage électropneumatique selon la revendication 6,
**caractérisée en ce que** ledit au moins un passage (21 a à 21 c) est entouré des deux côtés par un bourrelet d'étanchéité (24a, 24b).

8. Soupape de réglage électropneumatique selon la revendication 6,
**caractérisée en ce que** ledit conduit de milieu sous pression à l'intérieur de la soupape, qui s'étend à partir de ladite cage de soupape de relais (1) vers ladite cage de soupape pilote (2), alimente ladite au moins une soupape pilote en pression d'alimentation.

9. Soupape de réglage électropneumatique selon une quelconque des revendications précédentes,
**caractérisé en ce que** ledit bourrelet d'étanchéité (21a à 21c), vue en section transversale, présente une forme triangulaire ou trapézoïdale et se termine vers un bord d'étanchéité, qui correspond au partenaire étanchant.

10. Soupape de réglage électropneumatique selon une quelconque des revendications précédentes,
**caractérisé en ce qu'**un élément égalisateur de pression (22) est monté à au moins un site le long de la périphérie dudit élément d'étanchéité combiné annulaire (3), dans la zone de ladite partie d'étanchéité principale (20), afin de créer une égalisation protégée de la pression relativement à l'atmosphère pour des aires dans ladite cage de soupape pilote (2), qui ne sont pas utilisées en tant qu'une chambre sous pression.

11. Soupape de réglage électropneumatique selon une quelconque des revendications précédentes,
**caractérisé en ce que** ledit élément égalisateur de pression (22) est intégré dans ladite partie d'étanchéité principale (20) dudit élément d'étanchéité combiné annulaire (3) par vulcanisation ou y est enlié par montage postérieur.
